# EUROPEAN PATENT APPLICATION

(11) **EP 4 800 811 A1**
(43) Date of publication of application: **02.09.2026**
(21) Application number: 25749084.7
(22) Date of filing: 14.01.2025
(51) Int. Cl.: H01M 10/6568, H01M 10/613, H01M 50/289, H01M 50/342, H01M 50/367

(54) **BATTERY PACK AND DEVICE INCLUDING SAME**

(30) Priority: 30.01.2024 KR 20240013810
(71) Applicant: LG Energy Solution, Ltd., Seoul 07335 (KR)
(72) Inventor: JUNG, Minyong, Daejeon 34122 (KR); CHOI, Bum, Daejeon 34122 (KR); CHOI, Seungbin, Daejeon 34122 (KR)
(74) Representative: Plasseraud IP
(86) International application number: PCT/KR2025/000779
(87) International publication number: WO 2025/164997

(57) **Abstract**

A battery pack according to certain embodiments of the present disclosure comprises: a plurality of battery cells; a pack frame including a bottom frame and a side frame that form an accommodation space in which the battery cells are stored; and a coolant that flows while directly cooling the battery cells in the accommodation space. The side frame is provided with an inlet port for allowing the coolant to flow in and an outlet port for discharging the coolant. Cavities are formed inside the side frame, and each of the cavities is communicated with the inlet port and the outlet port.

## Description

### [TECHNICAL FIELD]

### Cross-Reference to Related Application(s)

This application claims priority to and the benefit of Korean Patent Application no. KR10-2024-0013810, filed on January 30, 2024, the entire contents of which are incorporated herein by reference.

The present disclosure relates to a battery pack and a device including the same, and more particularly, to an immersion cooling type battery pack, and a device including the same.

### [BACKGROUND ART]

As technology development and demands for mobile devices have increased, the demand for secondary batteries as energy sources has also rapidly increased. A lot of researches on secondary batteries capable of satisfying various needs have been carried out accordingly.

A secondary battery has attracted considerable attention as an energy source for power-driven devices, such as an electric bicycle, an electric vehicle, and a hybrid electric vehicle, as well as an energy source for mobile devices, such as a mobile phone, a digital camera, and a laptop computer.

In recent years, with the increasing necessity for a large-capacity secondary battery structure, including the utilization of the secondary battery as an energy storage source, a demand for a battery pack formed by assembling a plurality of secondary batteries has increased.

Meanwhile, when a plurality of battery cells are connected in series/parallel to configure a battery pack, it is common to configure a battery pack by disposing a plurality of battery cells in a pack frame and adding other components.

Since such battery cells are composed of secondary batteries which can be charged and discharged, such a high-output large-capacity secondary battery generates a large amount of heat in a charge and discharge process. In this case, heat generated from the large number of battery cells is added up in a narrow space, so that the temperature can rise more quickly and excessively. In other words, a battery module in which a large number of battery cells are stacked can obtain high output, but it is not easy to remove heat generated from the battery cells during charging and discharging. When the heat dissipation of the battery cells is not properly performed, deterioration of the battery cells is accelerated, the lifespan is shortened, and the possibility of explosion or ignition increases.

Moreover, in the case of a vehicle battery pack, it is frequently exposed to direct sunlight and may be placed under high-temperature conditions such as summer or desert areas. Further, since a plurality of battery modules are concentratedly disposed to increase the mileage of the vehicle, the flame or heat generated in one battery cell can easily propagate to an adjacent battery cell, which may eventually lead to ignition or explosion of the battery pack itself. Therefore, in order to effectively cool a highcapacity battery pack, an immersion cooling type is used in which a coolant directly cools the battery cells inside the battery pack.

### [DETAILED DESCRIPTION OF THE INVENTION]

### [Technical Problem]

Therefore, it is an object of the present disclosure to provide a battery pack having an efficient coolant circulation structure in an immersion cooling type which directly cools battery cells by using a coolant.

However, the technical objects to be solved by embodiments of the present disclosure are not limited to the above-described objects, and can be variously expanded within the scope of the technical idea included in the present disclosure.

### [Technical Solution]

According to certain aspects of the present disclosure, there is provided a battery pack comprising: a plurality of battery cells; a pack frame including a bottom frame and a side frame that form an accommodation space in which the battery cells are stored; and a coolant that flows while directly cooling the battery cells in the accommodation space, wherein the side frame is provided with an inlet port for allowing the coolant to flow in and an outlet port for discharging the coolant, and wherein cavities are formed inside the side frame, and each of the cavities is communicated with the inlet port and the outlet port.

The side frame may have a square pipe structure in which the cavities are formed inside.

The inlet port and the outlet port may be located on a surface opposite to the surface where the side frame faces the battery cells.

A cooling hole communicating with the cavity may be formed on the surface where the side frame faces the battery cells.

The coolant may flow into the accommodation space or be discharged from the accommodation space, while flowing through the cavity.

The cavity may comprise an inflow cavity connected to the inlet port and a discharge cavity connected to the outlet port. The inflow cavity and the discharge cavity may be separated from each other.

The coolant may flow into the accommodation space through the inlet port and the inflow cavity. The coolant that directly cools the battery cells may be discharged to the outside through the discharge cavity and the outlet port.

The side frame may comprise a first side frame and a second side frame that are located opposite to each other with the battery cells between them. The first side frame may have both the inlet port and the outlet port formed therein.

The cavity may comprise an inflow cavity connected to the inlet port and a discharge cavity connected to the outlet port. A vertical beam dividing the accommodation space into a first zone and a second zone may be located on the bottom frame. The coolant may flow through the first zone and the second zone in sequence.

A separation frame may be located between the battery cells and the second side frame. The coolant may circulate along the inflow cavity of the first side frame, the first zone, the cavity inside the separation frame, the second zone, and the discharge cavity of the first side frame.

The cavity may comprise an inflow cavity connected to the inlet port and a discharge cavity connected to the outlet port. A vertical beam dividing the accommodation space into a first zone and a second zone and having a passage formed therein may be located on the bottom frame. The coolant flowing through the first zone and the coolant flowing through the second zone may flow along the same direction.

The coolant may circulate along the inflow cavity of the first side frame, the first zone and the second zone, the passage inside the vertical beam, and the discharge cavity of the first side frame.

The battery cells may comprise a vent part. The bottom frame may be formed with a venting channel that guides venting gas or particles discharged from the vent part of the battery cell.

A vertical beam dividing the accommodation space into a plurality of zones may be located on the bottom frame. The venting channel corresponding to any one of the zones may have an independent venting flow path that is not shared with the venting channel corresponding to the other zones.

According to certain other aspects of the present disclosure, there is provided a device comprising the above-described battery pack.

### [Advantageous Effects]

According to certain embodiments of the present disclosure, in the immersion cooling that directly cools battery cells using a coolant, the cavities formed inside the side frame can be utilized as a cooling flow path through which the coolant flows, thereby increasing space utilization efficiency and achieving an efficient coolant circulation structure.

The effects of the present disclosure are not limited to the effects mentioned above, and additional other effects not mentioned above will be clearly understood from the description of the appended claims by those skilled in the art.

### [BRIEF DESCRIPTION OF THE DRAWINGS]

FIGS. 1 and 2 are perspective views of a battery pack according to certain embodiments of the present disclosure.
FIG. 3 is a perspective view showing a pack frame included in the battery pack of FIGS. 1 and 2.
FIGS. 4 (a) and (b) are respectively a perspective view and a side view of a battery cell according to certain embodiments of the present disclosure.
FIG. 5 is a cross-sectional view showing a cross section taken along the cutting line A-A' in FIG. 4 (a).
FIG. 6 is a cross-sectional view of a battery cell according to certain other embodiments of the present disclosure.
FIG. 7 is a cross-sectional perspective view of a battery pack according to certain embodiments of the present disclosure.
FIG. 8 is a partially enlarged cross-sectional view showing a section "B" of FIG. 7.
FIG. 9 is a partially enlarged cross-sectional view showing a section "C" of FIG. 8.
FIG. 10 is a partially enlarged cross-sectional view showing a section "D" of FIG. 8.
FIG. 11 is an exploded perspective view showing battery cells, a holding frame, and a spacer according to certain embodiments of the present disclosure.
FIGS. 12 and 13 are perspective views showing a first side frame according to certain embodiments of the present disclosure.
FIG. 14 is a cross-sectional perspective view showing a cross section taken along a portion including an inlet port of the first side frame according to certain embodiments of the present disclosure.
FIG. 15 is a partially enlarged cross-sectional view showing a section "E" of FIG. 14.
FIG. 16 is a cross-sectional perspective view showing a cross section taken along a portion including an outlet port of the first side frame according to certain embodiments of the present disclosure.
FIG. 17 is a partially enlarged cross-sectional view showing a section "F" of FIG. 16.
FIG. 18 is a partially enlarged perspective view showing an inlet port and an outlet port formed in the first side frame according to certain embodiments of the present disclosure.
FIG. 19 is a perspective cross-sectional view showing a cross section taken along a portion including an inlet port in the first side frame of FIG. 18.
FIG. 20 is a cross-sectional perspective view showing a cross section taken along a portion including an outlet port in the first side frame of FIG. 18.
FIG. 21 is a partial perspective view showing a part of a bottom frame according to certain embodiments of the present disclosure.
FIG. 22 is a plan view showing a bottom frame and battery cells according to certain embodiments of the present disclosure.
FIG. 23 is a perspective view showing a first side frame according to certain other embodiments of the present disclosure.
FIG. 24 is a partial cross-sectional view showing a cross section taken along the cutting line G-G' of FIG. 23.
FIG. 25 is a partial cross-sectional view showing a cross section taken along the cutting line H-H' of FIG. 23.
FIG. 26 is a partial perspective view showing a part of a bottom frame according to certain other embodiments of the present disclosure.
FIG. 27 is a partial cross-sectional view showing a cross section taken along the cutting line I-I' of FIG. 26.
FIG. 28 is a plan view showing a bottom frame and battery cells according to certain other embodiments of the present disclosure.

### [DETAILED DESCRIPTION OF THE EMBODIMENTS]

Hereinafter, with reference to the accompanying drawings, various embodiments of the present disclosure will be described in detail to the extent that one of ordinary skill in the art can easily practice the present disclosure. The present disclosure may be implemented in various different forms, and is not limited to the embodiments described herein.

In order to clearly describe the present disclosure, descriptions of parts unrelated to the description of the present disclosure will be omitted, and the same or similar components throughout the description will be denoted with the same reference numerals.

Since the drawings arbitrarily illustrate the dimension and thickness of each component for the convenience of description, the present disclosure is not necessarily limited to that illustrated. The drawings depict the thickness in an enlarged scale to clearly show different layers and regions. Further, the drawings exaggerate the thickness of a certain layer or region to facilitate the description thereof.

When a layer, film, region, plate or the like is arranged "on" a specific part, the description includes not only a case where the layer, film, region, plate or the like is arranged "directly on" the specific part, but also a case where the layer, film, region, plate or the like is arranged on the specific part via another part. When a part is arranged "directly on" another part, this indicates that no new component is present between the two parts. Further, when a component is arranged "on" a reference part, this indicates that the component is present at the top of or under the reference part, and does not necessarily indicate that the component is arranged only at the top of the reference part, which is opposite to the direction of gravity.

Throughout the descriptions herein, when a certain part "includes" a component, this does not indicate that the certain part excludes other components, but indicates that the part may further include other components, unless otherwise defined.

Throughout the descriptions herein, the terms "in a plan view" indicate viewing an object from above, and the terms "in a cross-sectional view" indicate viewing a vertical cross section of an object from side.

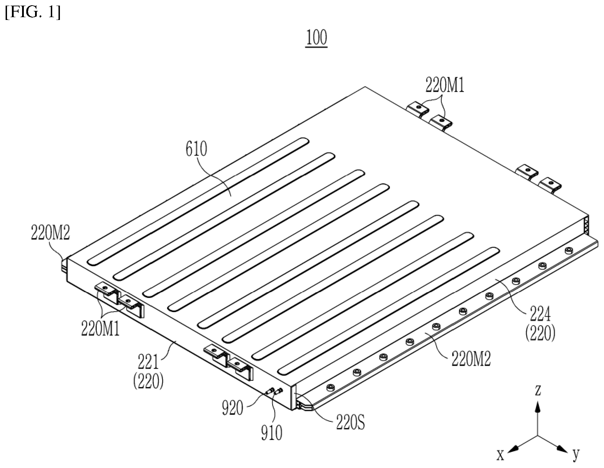

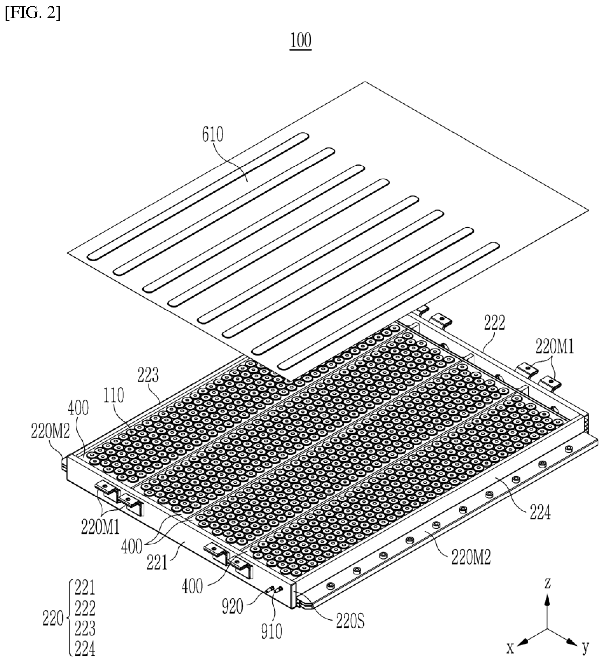

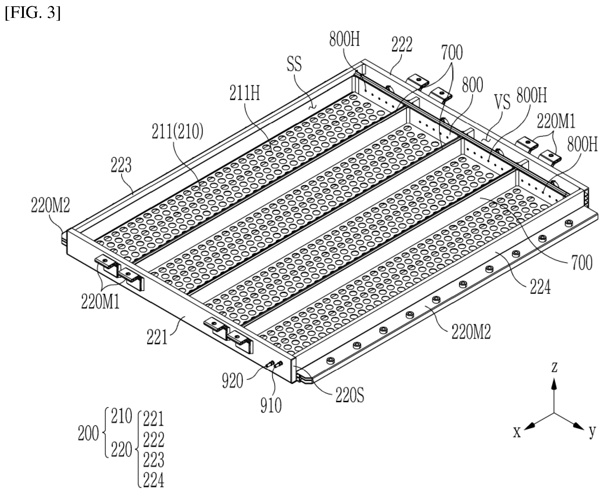

FIGS. 1 and 2 are perspective views of a battery pack according to certain embodiments of the present disclosure. FIG. 3 is a perspective view showing a pack frame included in the battery pack of FIGS. 1 and 2.

Referring to FIGS. 1 to 3, a battery pack 100 according to certain embodiments of the present disclosure comprises: a plurality of battery cells 110; a pack frame 200 including a bottom frame 210 and a side frame 220 that form an accommodation space SS in which the battery cells 110 are stored; and a coolant that flows while directly cooling the battery cells 110 in the accommodation space SS. The side frame 220 of the pack frame 200 is provided with an inlet port 910 for allowing the coolant to flow in and an outlet port 920 for discharging the coolant. Cavities are formed inside the side frame 220, and each of the cavities is communicated with the inlet port 910 and the outlet port 920. That is, the battery pack 100 according to the present embodiments corresponds to an immersion cooling type battery pack 100 in which the coolant flows inside of the pack frame 200 and comes into contact with the battery cells 110 to directly cool the battery cells 110, rather than a conventional indirect cooling type in which a heat sink through which a coolant flows is provided in the battery pack.

The side frame 220 according to the present embodiments has a cavity inside. In one example, the side frame 220 may have a square pipe structure having cavities formed therein, and may include a metal material. Thereby, it is possible to reduce the weight of the battery pack 100 and at the same time, secure the rigidity of the battery pack 100.

Furthermore, in the immersion cooling type battery pack 100, each of the cavities inside the side frame 220 is communicated with the inlet port 910 and the outlet port 920, so that the cavities inside the side frame 220 can be utilized as cooling paths for supplying and discharging the coolant. The side frame 220 can function as a member for coolant circulation beyond a simple outer pipe frame. Thereby, it is possible to reduce the components of the structure for supplying the coolant, thereby reducing the weight and volume of the battery pack 100 and improving the assembling property of the battery pack 100.

Below, the battery cell 110 according to the present embodiments will be described in detail first.

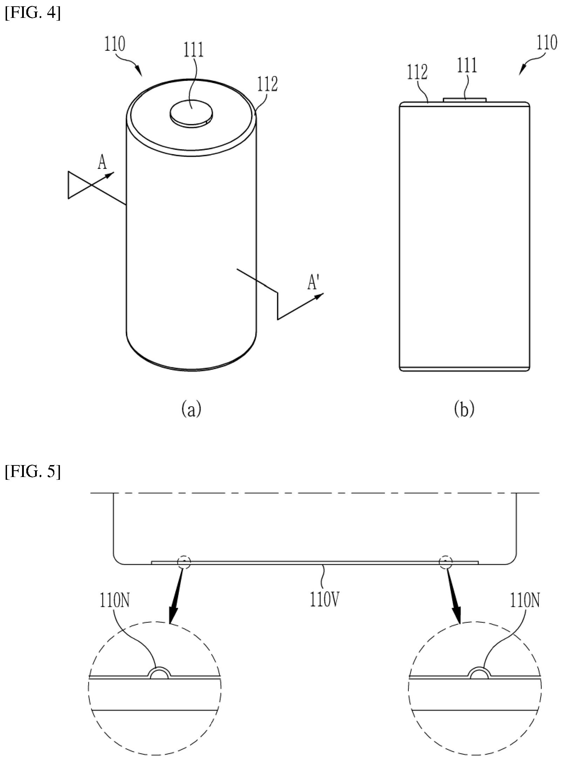

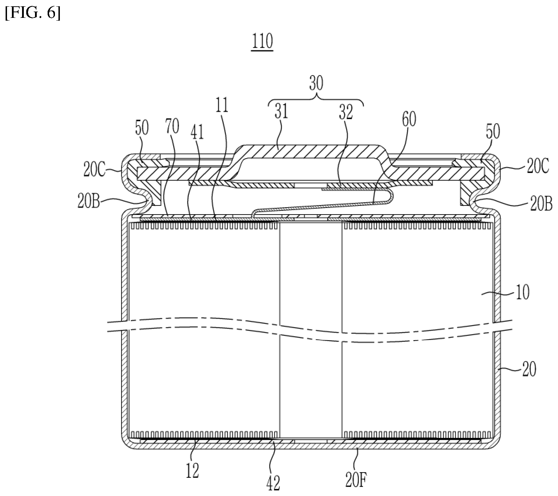

FIGS. 4 (a) and (b) are respectively a perspective view and a side view of a battery cell according to certain embodiments of the present disclosure. FIG. 5 is a cross-sectional view showing a cross section taken along the cutting line A-A' in FIG. 4 (a). FIG. 6 is a cross-sectional view of a battery cell according to certain other embodiments of the present disclosure.

Referring to FIGS. 4 to 6 together, the battery cell 110 according to the present embodiments may have a vent part 110V. The vent part 110V collectively refers to a member or mechanism provided in the battery cell 110 so as to be able to discharge venting gas or the like inside the battery cell 110.

In one example, the battery cell 110 according to the present embodiments may be a cylindrical battery cell. Specifically, the battery cell 110 may include an electrode assembly 10; a battery can 20 that stores the electrode assembly 10 and has an opened upper part; and a cap assembly 30 that is coupled to the opened upper part of the battery can 20. A gasket 50 may be interposed between the battery can 20 and the cap assembly 30. An exemplary structure of the battery cell 110 will be described below, but the battery cell of the present disclosure is not limited to such a structure.

The battery can 20 according to the present embodiment may be a cylindrical case having an opened upper part, and may store the electrode assembly 10 and an electrolytic solution (not shown) in an internal accommodation space, and may include a metal material such as aluminum (Al).

The cap assembly 30 according to the present embodiments may include a top cap 31 having a plate shape, and a connecting plate 32 electrically and mechanically coupled to the top cap 31. The top cap 31 may include a metal material having electrical conductivity, and may cover the opened upper part of the battery can 20. The top cap 31 may be electrically connected to the first segment 11 connected to the first electrode of the electrode assembly 10, and at the same time, may be electrically insulated from the battery can 20 by a gasket 50. Therefore, the cap assembly 30 according to the present embodiments including the top cap 31 may function as a first electrode terminal 111, which is an external terminal of the first electrode included in the electrode assembly 10.

Specifically, in the electrical connection between the top cap 31 and the first segment 11, the battery cell 110 according to the present embodiments may further comprise a first current collecting plate 41 located on the upper part of the electrode assembly 10. The first current collecting plate 41 may include a conductive metal material such as aluminum, copper, steel, nickel, etc., and may be electrically connected to the first segments 11 of the electrode assembly 10. The electrical connection may be performed through weld joining. A lead 60 may be connected to such a first current collector 41. The lead 60 may extend in the upper direction of the electrode assembly 10 and be connected to the connecting plate 32. In certain other embodiments, the lead 60 may be directly connected to the lower surface of the top cap 31. The coupling between the lead 60 and other components may be performed through welding. In addition, the first current collecting plate 41 may be formed integrally with the lead 60. In this case, the lead 60 may have a long plate shape extending outward from a vicinity of the center of the first current collecting plate 41.

The first current collecting plate 41 may have a plurality of projections and recesses (not shown) formed radially on its lower surface. In the case where the radial projections and recesses are provided, the first current collecting plate 41 may be pressed to press-fit the projections and recesses into the bent first segments 11. The coupling between the first current collecting plate 41 and the first segments 11 may be performed, for example, by laser welding. Laser welding may be performed by partially melting a base material of the first current collecting plate 41. In modified embodiments, welding between the first current collecting plate 41 and the first segments 11 may be performed in a state of interposing a solder. In this case, the solder may have a lower melting point compared to the first current collecting plate 41 and the first segments 11. Laser welding may be replaced by resistance welding, ultrasonic welding, spot welding, etc.

Meanwhile, the battery cell 110 according to the present embodiments may further include a second current collecting plate 42 located at a lower part of the electrode assembly 10. Specifically, the second current collecting plate 42 may be located between the electrode assembly 10 and the bottom part 20F of the battery can 20. The second current collecting plate 42 may include a conductive metal material such as aluminum, copper, steel, nickel, etc., and may be electrically connected to the second segments 12 of the electrode assembly 10. One surface of the second current collecting plate 42 may be coupled to the second segments 12, and the opposite surface of the second current collecting plate 42 may be coupled to the bottom part 20F of the battery can 20. Weld joining may be applied to the coupling of the second current collecting plate 42. Thereby, the battery can 20 according to the present embodiments can function as a second electrode terminal 112, which is an external terminal of the second electrode included in the electrode assembly 10.

Meanwhile, the secondary battery according to the present embodiments may include an insulating plate 70. The insulating plate 70 may cover the first current collecting plate 41. The insulating plate 70 covers the first current collecting plate 41 on the upper surface of the first current collecting plate 41, and thus can block the first current collecting plate 41 from contacting the battery can 20, particularly the beading part 20B of the battery can 20 described below. The insulating plate 70 may also be provided with a separate lead hole so that a lead 60 extending upward from the first current collecting plate 41 may be pulled out. The lead 60 may be pulled out upward through the lead hole of the insulating plate 70 and coupled to the lower surface of the connecting plate 32 or the lower surface of the top cap 31.

The peripheral edge region of the insulating plate 70 can be interposed between the first current collecting plate 41 and the beading part 20B of the battery can 20, thereby fixing a coupling body between the electrode assembly 10 and the first current collecting plate 41. Therefore, the coupling body between the electrode assembly 10 and the first current collecting plate 41 can limit its movement in the axial direction of the electrode assembly 10, thereby improving the assembling stability of the secondary battery. The insulating plate 70 can be made of an insulating polymer resin. In one example, the insulating plate 70 can include one or more materials selected from the group consisting of polyethylene, polypropylene, polyimide, and polybutylene terephthalate.

Meanwhile, the battery can 20 according to the present embodiments may include a crimping part 20C and a beading part 20B. The crimping part 20C is a part of the battery can 20 that wraps around the cap assembly 30 and the gasket 50. Specifically, the battery can 20 and the cap assembly 30 may be joined by crimping with the gasket 50 interposed between them. That is, the crimp joining may be applied to the coupling between the battery can 20 and the cap assembly 30. Thus, the crimping part 20C may be formed in the battery can 20. More specifically, the gasket 50 is located between the battery can 20 and the cap assembly 30, and then the upper end of the battery can 20 is bent in the direction where the cap assembly 30 is located, thereby forming a crimping joint.

The beading part 20B refers to a portion where a part of the battery can 20 is recessed toward the center in a region higher than the electrode assembly 10 among the side surface portions of the battery can 20, and is intended to stably arrange the cap assembly 30 and to prevent movement of the electrode assembly 10. That is, the cap assembly 30 according to the present embodiments and the gasket 50 surrounding it can be seated on the beading part 20B of the battery can 20. The above-described crimp joining can be performed in a state where the cap assembly 30 and the gasket 50 surrounding it are seated on the beading part 20B.

The gasket 50 according to the present embodiments is located between the battery can 20 and the cap assembly 30, and thus can enhance the sealing performance of the secondary battery. The gasket 50 may also include an electrically insulating material, and may block a short circuit from occurring between the battery can 20 functioning as the second electrode terminal 112 and the cap assembly 30 functioning as the first electrode terminal 111. The gasket 50 may include at least one material selected from the group consisting of polypropylene (PP), polyethylene terephthalate (PET), polybutylene terephthalate (PBT), and perfluoroalkoxy alkane (PFA).

The vent part 110V according to the present embodiments may be formed on the lower surface of the battery cell 110. That is, it may be formed on the bottom part 20F (see FIG. 6) of the battery can 20.

When a thermal event or thermal runaway occurs inside a battery cell 110, high-temperature venting gas or particles may be generated. The vent part 110V collectively refers to a member or mechanism that can discharge such high-temperature venting gas or particles. In one example, a notch part 110N, which is relatively thinner than a region adjacent to the bottom part of the battery, may may be formed on the lower surface of the battery cell 110. The notch part 110N may have a constant peripheral edge. When the internal pressure of the battery cell 110 increases due to high-temperature venting gas generated inside any of the battery cells 110, the notch part 110N that is weak in rigidity due to its thin thickness may be ruptured first. Due to the rupture of the notch part 110N, the vent part 110V is opened, and high-temperature venting gas or particles, etc. can be discharged through the vent part 110V that is opened in this manner.

However, the structure of the vent part 110V is only one illustrative example, and the shape of the vent part 110V is not particularly limited as long as it is a member or mechanism that can discharge the internal venting gas in the event of a thermal event or thermal runaway.

Meanwhile, although not specifically illustrated, the battery cell according to the present disclosure may be a prismatic battery cell in which the electrode assembly is stored in a prismatic can. That is, although the battery cell according to the present embodiments is depicted in the figure as being a cylindrical battery cell, this is only one illustrative structure of the battery cell of the present disclosure, and the battery cell according to certain other embodiments of the present disclosure may be a prismatic battery cell.

Meanwhile, referring again to FIGS. 1 to 3, the pack frame 200 according to the present embodiments includes a bottom frame 210 and a side frame 220 that form an accommodation space SS in which battery cells 110 are accommodated, as described above. The battery cells 110 may be placed on the bottom frame 210, and a side frame 220 may be extended along the edge of the bottom frame 210. In one example, the side frame 220 may include a first side frame 221, a second side frame 222, a third side frame 223, and a fourth side frame 224. The first side frame 221, the second side frame 222, the third side frame 223, and the fourth side frame 224 may be arranged along the four sides of the edge of the bottom frame 210 having a square shape. An accommodation space with an opened upper part is provided by the bottom frame 210 and the side frame 220, and the battery cells 110 can be arranged in such an accommodation space. After the battery cells 110 are arranged in the accommodation space, the opened upper part of the accommodation space can be covered by the pack upper cover 610. The pack upper cover 610 can be joined to the side frame 220 of the pack frame 200, and in one example, weld joining or joining using an adhesive can be applied. The battery cells 110 can be sealed by the pack frame 200 and the pack upper cover 610. Further, although not specifically illustrated, a gasket for improving sealing performance may be interposed between the pack upper cover 610 and the side frame 220.

Meanwhile, the battery pack 100 according to the present embodiments may include a mounting part 220M1 and a mounting beam 220M2 provided on a side frame 220 for fixing the battery pack 100. In one example, FIGS. 1 and 2 show a state in which the mounting parts 220M1 are formed on the first side frame 221 and the second side frame 222, and the mounting beams 220M2 are formed on the third side frame 223 and the fourth side frame 224. When mounting the battery pack 100 to a device, the mounting part 220M1 and the mounting beam 220M2 can be utilized. In one example, when mounting the battery pack 100 to a vehicle device, the mounting part 220M1 and the mounting beam 220M2 can be fixed to the vehicle chassis.

Hereinafter, the battery pack structure for preventing coolant leakage in the immersion cooling type according to the present embodiments will be described in detail.

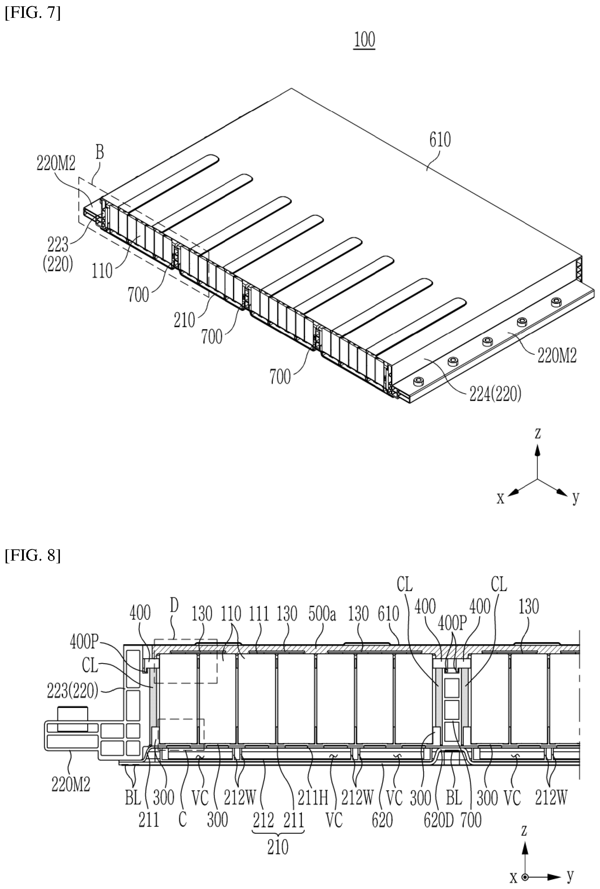

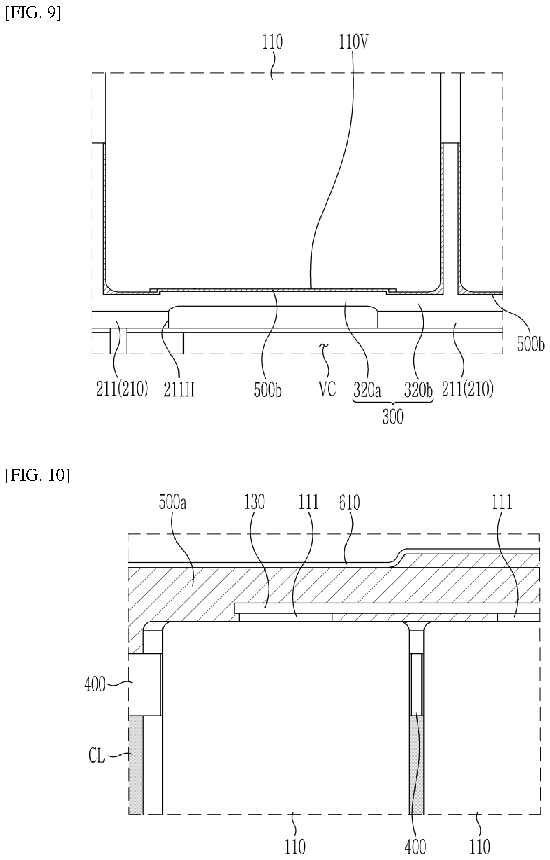

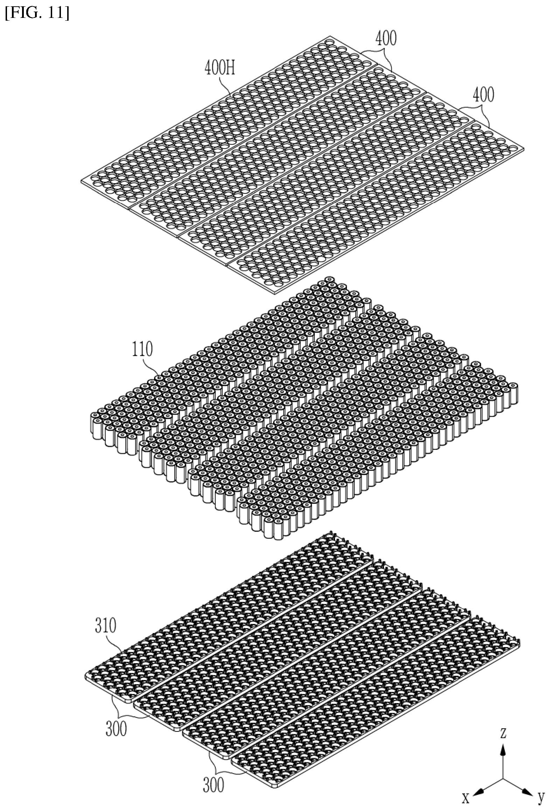

FIG. 7 is a cross-sectional perspective view of a battery pack according to certain embodiments of the present disclosure. FIG. 8 is a partially enlarged cross-sectional view showing a section "B" of FIG. 7. FIG. 9 is a partially enlarged cross-sectional view showing a section "C" of FIG. 8. FIG. 10 is a partially enlarged cross-sectional view showing a section "D" of FIG. 8. FIG. 11 is an exploded perspective view showing battery cells, a holding frame, and a spacer according to certain embodiments of the present disclosure.

Referring to FIGS. 2, 3, and 7 to 11, the battery pack 100 according to the present embodiments may further include a spacer 300 that is located on the upper part of the bottom frame 210 and on which battery cells 110 are seated, and a holding frame 400 that is located on the upper part of the spacer 300 and formed with a hole 400H into which battery cells 110 are fitted.

The coolant CL flowing into the inlet port 910 can flow in a space between the spacer 300 and the holding frame 400 so as to directly cool the battery cells 110 inside the pack frame 200. As shown in FIG. 8, the coolant CL flowing in the space between the spacer 300 and the holding frame 400 can directly cool the battery cells 110 while contacting the battery cells 110.

As described above, the side frame 220 may be formed with an inlet port 910 and an outlet port 920. In one example, the state in which the inlet port 910 and the outlet port 920 are formed in the first side frame 221 is shown in FIGS. 2 and 3. The coolant CL flowing in through the inlet port 910 can cool the battery cells 110 while flowing along the space between the spacer 300 and the holding frame 400, and then be discharged through the outlet port 920. The inlet port 910 and the outlet port 920 are connected to a coolant circulation system (not shown) outside the battery pack 100, so that the coolant CL can be continuously circulated.

The holding frame 400 can be located between the spacer 300 and the pack upper cover 610. The holding frame 400 is formed with holes 400H, so that the battery cells 110 can be fitted into the holes 400H. For this purpose, the hole 400H of the holding frame 400 can have a shape corresponding to the outer shape of the battery cells 110. If the battery cell 110 is a cylindrical battery, the hole 400H of the holding frame 400 may be circular, and if the battery cell 110 is a prismatic battery, the hole 400H of the holding frame 400 may be square.

The holding frame 400 may also include protrusions 400P. As shown in FIG. 11, the protrusions 400P of the holding frame 400 may be hook-coupled to the side frame 220 or the vertical beam 700 described below. Due to the hook-coupling of the protrusions 400P, the holding frame 400 may be mounted on the side frame 220 or the vertical beam 700 while being spaced apart from the spacer 300 by a certain distance. The holding frame 400 is spaced apart from the spacer 300 by a certain distance to thereby ensure a space through which the coolant CL flows.

The spacer 300 can be placed on the bottom frame 210. The spacer 300 may be formed with a seating part 310 on which the battery cells 110 can be seated. The battery cell 110 is not located directly on the bottom frame 210, but can be placed on the bottom frame 210 while the battery cell 110 is seated on the seating part 310 of the spacer 300. For this purpose, the seating part 310 of the spacer 300 can have a shape corresponding to the outer shape of the battery cells 110. If the battery cell 110 is a cylindrical battery, the seating part 310 of the spacer 300 may be circular, and if the battery cell 110 is a prismatic battery, the seating part 310 of the spacer 300 may be square. The battery cells 110 are located in the seating part 310 of the spacer 300, so that the battery cells 110 can be stably arranged and fixed in the space inside the pack frame 200.

As described above, the spacer 300 and the holding frame 400 can set a space in which the coolant CL flows, and can prevent the coolant CL from leaking into other spaces. The spacer 300 corresponds to the lower limit in which the coolant flows, and the holding frame 400 corresponds to the upper limit in which the coolant flows. By preventing coolant leakage in this way, the safety of the battery pack 100 and the cooling performance can be improved.

Specifically, in the region higher than the holding frame 400, the busbar 130 that guides the electrical connection of the battery cells 110 can be connected to the electrode terminals 111 and 112 of the battery cells 110. As described above, the cap assembly 30 and the battery can 20 of the battery cell 110 can function as the first electrode terminal 111 and the second electrode terminal 112 of the battery cell 110. The busbar 130 is connected to the first electrode terminal 111 or the second electrode terminal 112, thereby being able to perform the HV connection, which is the electrical connection of the battery cells 110. The HV connection is a connection that serves as a power source to supply power that requires high voltage, and refers to an electrical connection between battery cells or an electrical connection between a battery pack and a device. That is, the electrical connection between battery cells 110 can be made in the upper region of the holding frame 400. In other words, the space where the coolant CL flows and the space of the HV connection where an electrical connection between battery cells 110 are made can be separated from each other by the holding frame 400. As will be described later, the coolant CL may be an insulating oil or cooling water. When the coolant CL, which is cooling water, comes into contact with the HV connection portion, a short circuit may occur, which may cause serious safety problems. Furthermore, even if the coolant CL is an insulating oil, when the coolant CL comes into contact with the part where the electrical connection between battery cells 110 is made, it may have a negative effect on the electrical connection between battery cells 110. Thus, in the present embodiments, by separating the space where the coolant CL flows to the holding frame 400 and the space where the electrical connection between the battery cells 110 is made, it is possible to minimize the effect of the coolant CL on the electrical connection of the battery cells 110, while maintaining the effect of increasing the cooling performance through direct cooling of the coolant CL.

In the battery pack 100 according to the present embodiments, a first waterproof adhesive 500a can be applied to the upper part of the holding frame 400. Due to the first waterproof adhesive 500a applied to the upper part of the holding frame 400, the coolant CL can be prevented from passing the holding frame 400 and leaking to the upper region of the holding frame 400. In a state in which the battery cell 110 is mounted to the hole 400H of the holding frame 400, a first waterproof adhesive 500a can be applied to the upper surface of the holding frame 400 and the upper region of the battery cell 110.

As described above, the battery pack 100 may include a pack upper cover 610 that covers the opened upper part of the pack frame 200, wherein a first waterproof adhesive 500a may be applied to a space between the holding frame 400 and the pack upper cover 610. In particular, at least some of the busbar 130 may be surrounded by the first waterproof adhesive 500a. Further the peripheral space of the busbar 130 may be filled with the first waterproof adhesive 500a. Moreover, the space between the holding frame 400 and the pack upper cover 610 may be filled with the first waterproof adhesive 500a. Due to the holding frame 400 and the first waterproof adhesive 500a, it is possible to prevent the coolant CL from leaking into the upper region of the holding frame 400.

In the battery pack 100 according to the present embodiments, a second waterproof adhesive 500b may be applied to a surface of the spacer 300 that faces the battery cells 110. Specifically, the second waterproof adhesive 500b may be applied on the seating part 310 of the spacer 300. Due to the spacer 300 and the second waterproof adhesive 500b, the coolant CL may be prevented from passing the spacer 300 and leaking to the lower region of the spacer 300.

The first waterproof adhesive 500a and the second waterproof adhesive 500b according to the present embodiments are not particularly limited in respect of the material as long as they exhibit waterproof performance and have impact resistance, adhesiveness, electrical insulation properties, and the like. In one example, the first waterproof adhesive 500a and the second waterproof adhesive 500b may include a 2-liquid type epoxy-based material in which a curing agent is mixed into a main agent.

Meanwhile, the coolant CL according to the present embodiments may be a fluid. In the battery pack 100, the coolant CL is in direct contact with the battery cells 110, so that the coolant CL may be electrically insulating. The coolant CL may be a material having insulating properties. In one example, the coolant CL may be an insulating oil. However, in the case of the battery pack 100 according to the present embodiments, since the coolant CL is prevented from leaking to a region other than the space between the spacer 300 and the holding frame 400, a general cooling water may also be applied as the coolant CL.

Below, the coolant circulation structure in the battery pack 100 according to the present embodiments will be described.

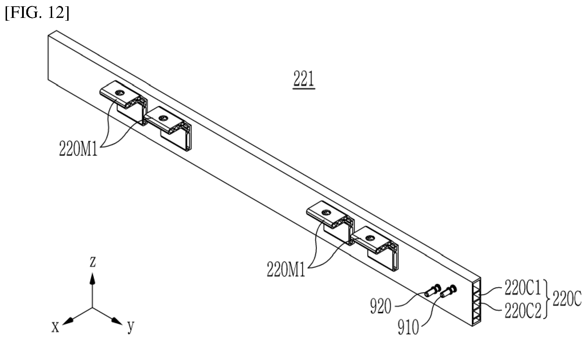

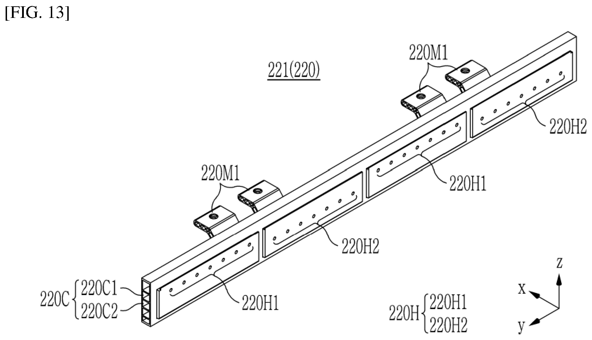

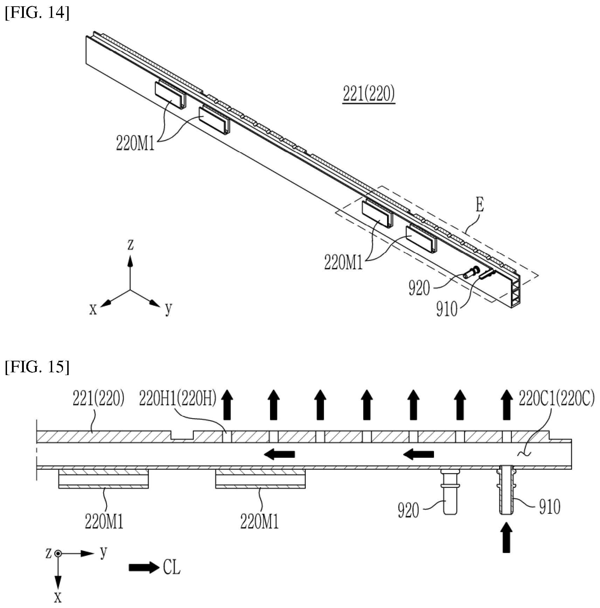

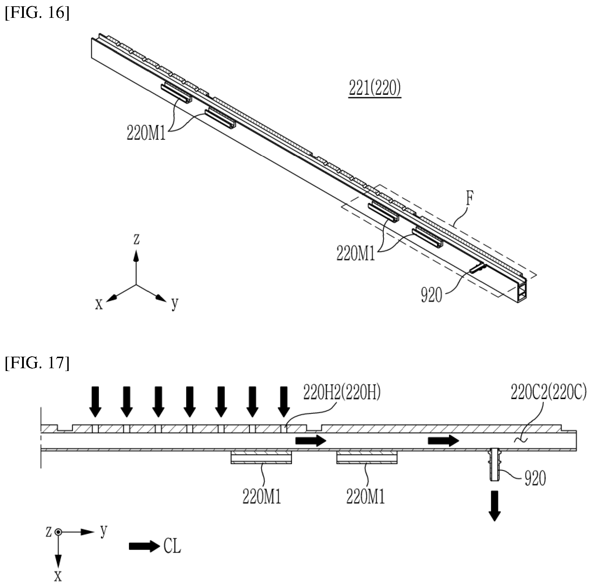

FIGS. 12 and 13 are perspective views showing a first side frame according to certain embodiments of the present disclosure. Specifically, FIG. 12 shows a surface of the first side frame on which the inlet port 910 and the outlet port 920 are located, and FIG. 13 shows the surface of the first side frame opposite to the surface on which the inlet port 910 and the outlet port 920 are located. FIG. 14 is a cross-sectional perspective view showing a cross section taken along a portion including an inlet port of the first side frame according to certain embodiments of the present disclosure. FIG. 15 is a partially enlarged cross-sectional view showing a section "E" of FIG. 14. FIG. 16 is a cross-sectional perspective view showing a cross section taken along a portion including an outlet port of the first side frame according to certain embodiments of the present disclosure. FIG. 17 is a partially enlarged cross-sectional view showing a section "F" of FIG. 16.

Referring to FIGS. 3, and 12 to 17 together, the side frame 220 is provided with an inlet port 910 for allowing a coolant to flow in and an outlet port 920 for discharging a coolant as described above. In one example, the inlet port 910 and the outlet port 920 may be located in the first side frame 221 of the side frames 220.

In addition, the inlet port 910 and the outlet port 920 may be located on a surface opposite to the surface where the side frame 220 faces the battery cells 110. Cavities 220C are formed inside the side frame 220, and each of the cavities 220C is communicated with the inlet port 910 and the outlet port 920. Meanwhile, a cooling hole 220H communicating with the cavity 220C may be formed on a surface where the side frame 220 faces the battery cells 110. That is, in the side frame 220, the cooling hole 220H may be located on the opposite side of the inlet port 910 and the outlet port 920.

In the immersion cooling type battery pack 100 according to the present embodiments, the cavity 220C inside the side frame 220 can be utilized as a cooling path for supplying and discharging the coolant. That is, the coolant CL may flow into an accommodation space SS in which the battery cell 110 is located or may be discharged from the accommodation space SS, while flowing through the cavity 220C.

Meanwhile, for convenience of explanation, FIGS. 12 to 17 show a state in which both side surfaces of the first side frame 221 are opened so that the cavity 220C can be seen, however, actually, as shown in FIGS. 1 to 3, a sealing plate 220S can be attached to both side surfaces of the first side frame 221. The cavities 220C inside the side frame 220 are closed on both side surfaces. That is, the cavities 220C have a sealed structure in which all four sides are closed except for the path through the inlet port 910, the outlet port 920 and the cooling hole 220H.

Meanwhile, the inlet port 910 and the outlet port 920 according to the present embodiments may be located together in one of the side frames 220. In one example, the inlet port 910 and the outlet port 920 may be formed in the first side frame 221. A coolant circulation system (not shown) for circulating a coolant CL may be connected to the inlet port 910 and the outlet port 920. However, since this coolant circulation system (not shown) may be provided on only one side of the battery pack 100 (in the present embodiments, on the side where the first side frame 221 is located), it can help enhance the space utilization within the device to which the battery pack 100 is mounted.

Meanwhile, the cavity 220C according to the present embodiments may include an inflow cavity 220C1 connected to the inlet port 910; and a discharge cavity 220C2 connected to the outlet port 920. The inflow cavity 220C1 and the discharge cavity 220C2 may be in a state of being separated from each other. Providing an inflow cavity 220C1 and a discharge cavity 220C2 that do not communicate with each other is intended to separate the path of the coolant flowing in and the path of the coolant being discharged in the coolant circulation structure. That is, the coolant flowing through the inflow cavity 220C1 is not mixed with the coolant flowing through the discharge cavity 220C2.

Furthermore, the cooling hole 220H formed on a surface opposite to the surface where the inlet port 910 and the outlet port 920 are formed may include an inflow cooling hole 220H1 connected to the inflow cavity 220C1; and a discharge cooling hole 220H2 connected to the discharge cavity 220C2. The inlet port 910, the inflow cavity 220C1 and the inflow cooling hole 220H1 may be communicated with each other, and the outlet port 920, the discharge cavity 220C2 and the discharge cooling hole 220H2 may be communicated with each other.

Thereby, the coolant CL may be flowed into the accommodation space SS through the inlet port 910 and the inflow cavity 220C1. More specifically, the coolant CL may pass through the inlet port 910, the inflow cavity 220C1 and the inflow cooling hole 220H1 in sequence and be flowed into the accommodation space SS where the battery cells 110 are placed.

Meanwhile, the coolant CL that directly cools the battery cells 110 may be discharged to the outside through the discharge cavity 220C2 and the outlet port 920. More specifically, the coolant CL that directly cools the battery cells 110 while flowing around the battery cells 110 in the accommodation space SS may be discharged to the outside through the discharge cooling hole 220H2, the discharge cavity 220C2 and the outlet port 920 and returned to the coolant circulation system. Through the above-described series of processes, immersion cooling can be performed while the coolant CL is circulating inside the battery pack 100.

Below, the circulation form of the coolant CL according to certain embodiments of the present disclosure will be described in detail.

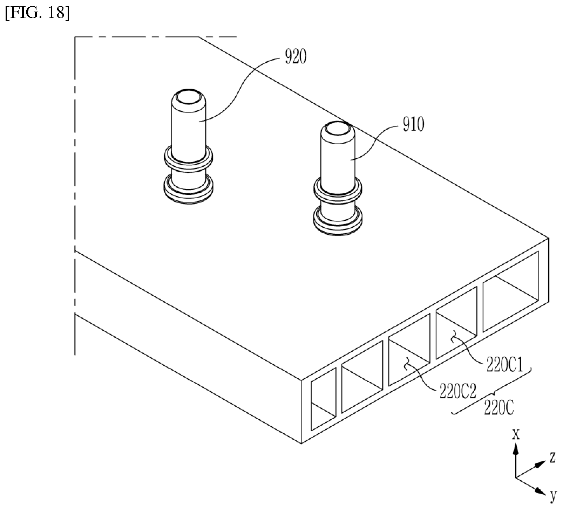

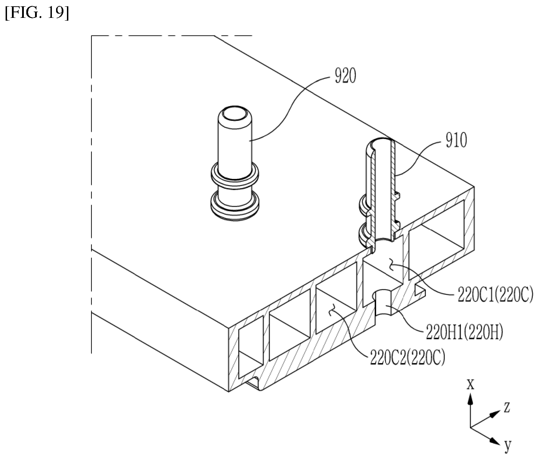

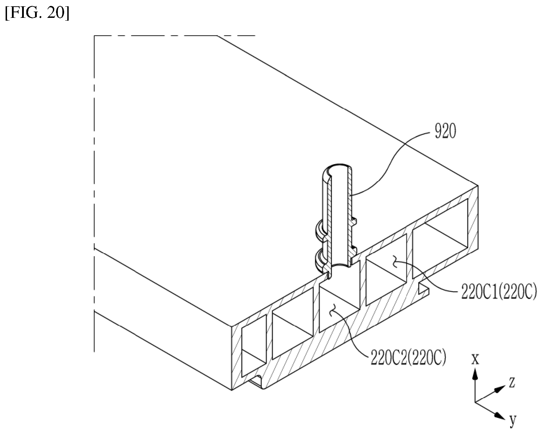

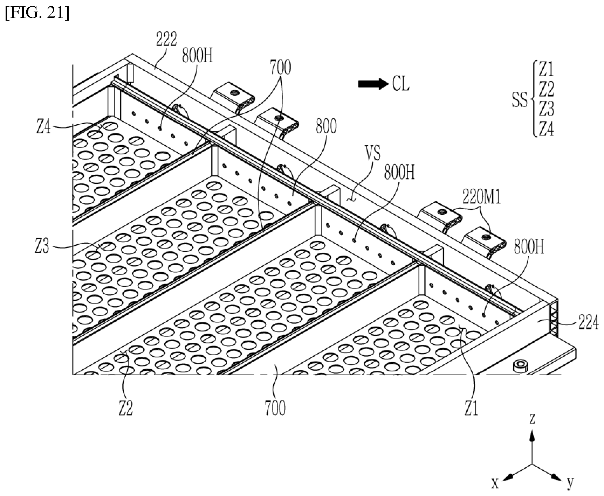

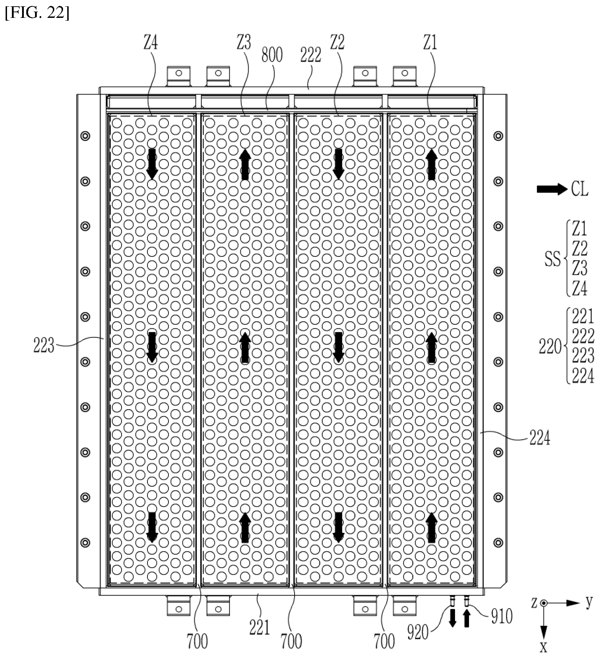

FIG. 18 is a partially enlarged perspective view showing an inlet port and an outlet port formed in the first side frame according to certain embodiments of the present disclosure. FIG. 19 is a perspective cross-sectional view showing a cross section taken along a portion including an inlet port in the first side frame of FIG. 18. FIG. 20 is a cross-sectional perspective view showing a cross section taken along a portion including an outlet port in the first side frame of FIG. 18. FIG. 21 is a partial perspective view showing a part of a bottom frame according to certain embodiments of the present disclosure. FIG. 22 is a plan view showing a bottom frame and battery cells according to certain embodiments of the present disclosure. In particular, FIG. 22 shows the bottom frame and the battery cells as viewed along the -z axis on the xy plane.

Referring to FIGS. 2, 3, 13, 15, and 17 to 22 together, the side frame 220 according to the present embodiments may include a first side frame 221, a second side frame 222, a third side frame 223, and a fourth side frame 224 as described above. Here, the first side frame 221 and the second side frame 222 may be located opposite to each other with the battery cells 110 between them. In addition, as described above, both an inlet port 910 and an outlet port 920 may be formed in the first side frame 221.

Meanwhile, in the battery pack 100 according to the present embodiments, a vertical beam 700 that divides the battery cells 110 into a plurality of battery cell groups may be located on the bottom frame 210. The vertical beam 700 may be located upright on the bottom frame 210 so that one surface of the vertical beam 700 is perpendicular to one surface of the bottom frame 210. The accommodation space SS in which the battery cells 110 are stored may be divided into a plurality of zones Z1, Z2, Z3 and Z4 by the vertical beam 700. The state in which three vertical beams 700 are located at certain intervals on the bottom frame 210 is illustrated in one example. By the three vertical beams 700, the accommodation space SS may be divided into a first zone Z1, a second zone Z2, a third zone Z3, and a fourth zone Z4.

Meanwhile, the battery pack 100 according to the present embodiments may include a separation frame 800 located adjacent to the side frame 220. In one example, the separation frame 800 may be located adjacent to the second side frame 222. The separation frame 800 may be located between the battery cells 110 and the second side frame 222, and may be placed on the bottom frame 210. A venting space VS, which is a space in which venting gas discharged from the battery cells 110 is discharged, may be formed between the separation frame 800 and the second side frame 222. The venting space VS will be described later.

The vertical beam 700 and the separation frame 800 according to the present embodiments may be a metal frame having an internal cavity, similar to the side frame 220. Specifically, the vertical beam 700 and the separation frame 800 may be metal frames in the form of a square pipe having a cavity. Therefore, the weight of the battery pack 100 can be reduced, and at the same time, the rigidity of the battery pack 100 can be secured. In addition, since the bottom frame 210, the side frame 220, the vertical beam 700 and the separation frame 800 include metal materials, the weld joining can be used for the connection between the frames. The weld joining method is not particularly limited, however, MIG welding (Metal Inert Gas Welding) or FSW (Friction Stir Welding) can be applied in one example.

Meanwhile, the battery pack 100 according to the present embodiments may further include a pack lower cover 620 that covers the lower part of the bottom frame 210. The pack lower cover 620 may be a plate-shaped member including a metal material.

As described above, the coolant CL may pass through the inlet port 910, the inflow cavity 220C1, and the inflow cooling hole 220H1 in sequence and be flowed into an accommodation space SS where the battery cells 110 are placed. At this time, the coolant CL can flow sequentially through the first zone Z1 and the second zone Z2 by the vertical beam 700 that divides the accommodation space SS into the first zone Z1 and the second zone Z2. In addition, the coolant CL can flow sequentially through the third zone Z3 and the fourth zone Z4 by the vertical beam 700 that divides the accommodation space SS into the third zone Z3 and the fourth zone Z4. The direction of the coolant CL flowing through the first zone Z1 can be opposite to the direction of the coolant CL flowing through the second zone Z2. Furthermore, the direction of the coolant CL flowing in the third zone Z3 may be opposite to the direction of the coolant CL flowing in the fourth zone Z4.

Specifically, among the cooling holes 220H formed in the side frame 220, the inflow cooling holes 220H1 may be communicated with the first zone Z1 and the third zone Z3, and the discharge cooling holes 220H2 may be communicated with the second zone Z2 and the fourth zone Z4. Further, the outer surface of the separation frame 800 may be formed with separation frame holes 800H. Specifically, the separation frame 800 may have an internal cavity, and the separation frame holes 800H may be connected to the cavity inside the separation frame 800.

The coolant CL may pass through the inlet port 910, the inflow cavity 220C1, and the inflow cooling hole 220H1 in sequence and be flowed into the first zone Z1 and the third zone Z3. The coolant CL flowing through the first zone Z1 and the third zone Z3 can move to the cavity inside the separation frame 800 through the separation frame holes 800H corresponding to the first zone Z1 and the third zone Z3. Subsequently, the coolant CL can move to the second zone Z2 and the fourth zone Z4 through the separation frame holes 800H corresponding to the second zone Z2 and the fourth zone Z4. The coolant CL flowing through the second zone Z2 and the fourth zone Z4 may pass through the discharge cooling hole 220H2, the discharge cavity 220C2 and the outlet port 920 and be discharged to the outside of the battery pack 100.

That is, the coolant CL can circulate along the inflow cavity 220C1 of the first side frame 221, the first zone Z1, the cavity inside the separation frame 800, the second zone Z2, and the discharge cavity 220C2 of the first side frame 221. Another coolant CL can circulate along the inflow cavity 220C1 of the first side frame 221, the third zone Z3, the cavity inside the separation frame 800, the fourth zone Z4, and the discharge cavity 220C2 of the first side frame 221. Through the circulation structure of such coolants CL, direct cooling of the battery cells 110 can be performed. In particular, the cavity 220C of the existing side frame 220 and the cavity of the separation frame 800 are utilized as structures for coolant circulation, and the vertical beams 700 are appropriately arranged, thereby enabling a uniform flow of the coolant CL for each zone. The uniform flow of the coolant CL for each zone can reduce the cooling deviation between the respective battery cell 110, which can lead to an improvement in the performance of the battery pack 100.

Below, the circulation form of the coolant CL according to certain other embodiments of the present disclosure will be described in detail.

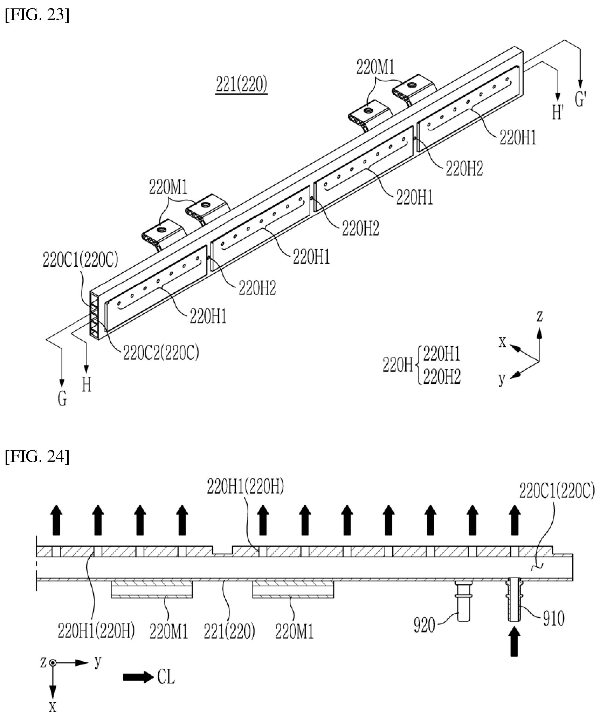

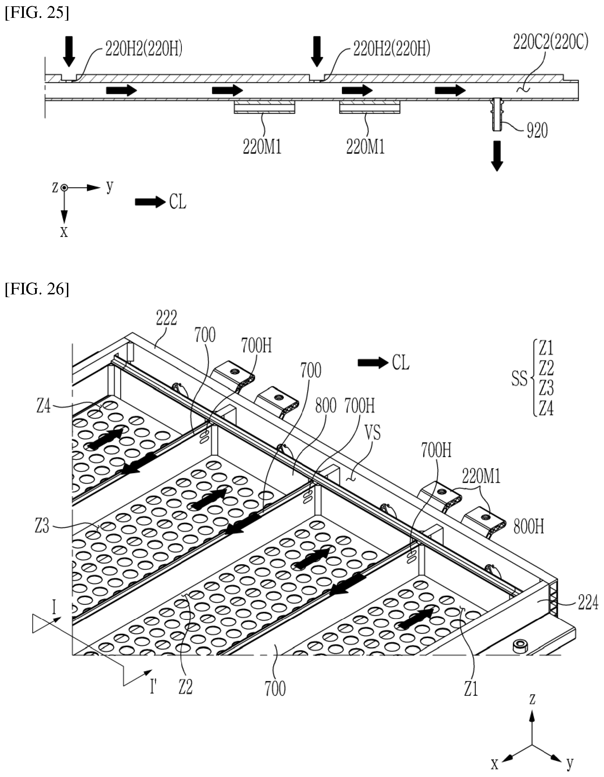

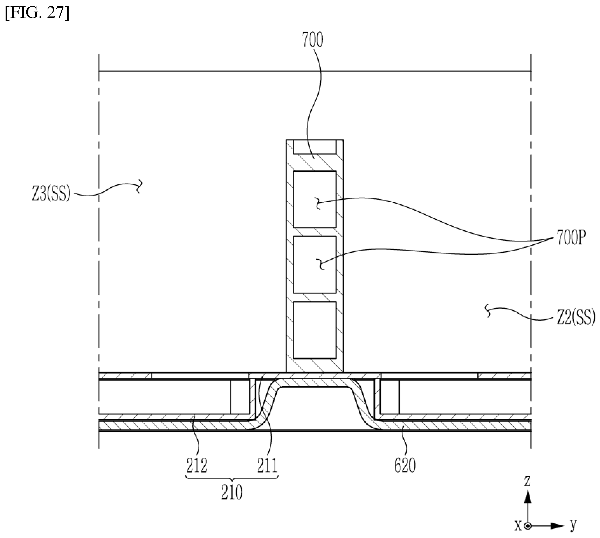

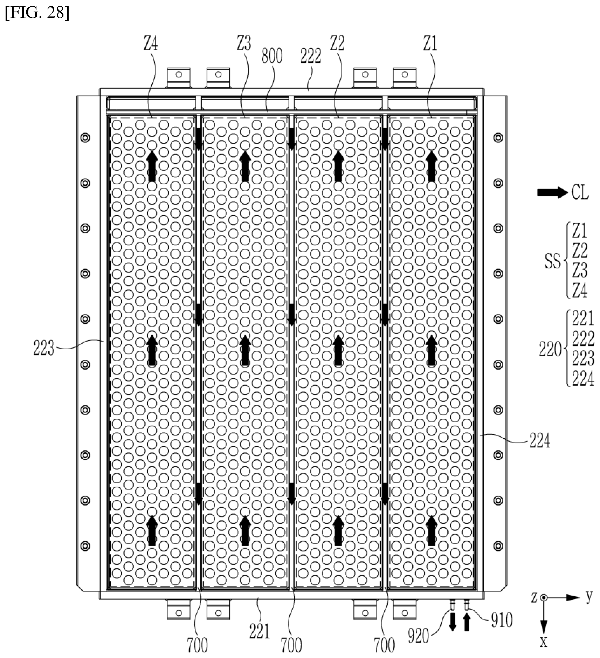

FIG. 23 is a perspective view showing a first side frame according to certain other embodiments of the present disclosure. FIG. 24 is a partial cross-sectional view showing a cross section taken along the cutting line G-G' of FIG. 23. FIG. 25 is a partial cross-sectional view showing a cross section taken along the cutting line H-H' of FIG. 23. FIG. 26 is a partial perspective view showing a part of a bottom frame according to certain other embodiments of the present disclosure. FIG. 27 is a partial cross-sectional view showing a cross section taken along the cutting line I-I' of FIG. 26. FIG. 28 is a plan view showing a bottom frame and battery cells according to certain other embodiments of the present disclosure. In particular, FIG. 28 shows a bottom frame and the battery cells as viewed along the -z-axis direction on the xy plane.

Referring to FIGS. 23 to 28, a battery pack 100 according to certain other embodiments of the present disclosure may include a bottom frame 210 and a side frame 220; the side frame 220 may include a first side frame 221, a second side frame 222, a third side frame 223 and a fourth side frame 224; and both an inlet port 910 and an outlet port 920 may be formed in the first side frame 221. In addition, an inlet port 910, an outlet port 920, an inflow cavity 220C1, a discharge cavity 220C2, an inflow cooling hole 220H1, and a discharge cooling hole 220H2 may be formed in the first side frame 221. The battery pack 100 may include a vertical beam 700 that divides the accommodation space SS into a plurality of zones Z1, Z2, Z3 and Z4 and a separation frame 800 located between the battery cells 110 and the second side frame 222. Details of each of the components described above are omitted because they overlap with the contents previously described.

In the battery pack 100 according to the present embodiments, the coolant CL may pass through the inlet port 910, the inflow cavity 220C1 and the inflow cooling hole 220H1 in sequence and be flowed into the accommodation space SS in which the battery cells 110 are placed. At this time, a passage 700P may be formed inside the vertical beam 700 that divides the accommodation space SS into the first zone Z1 and the second zone Z2. The coolant CL flowing through the first zone Z1 and the coolant CL flowing through the second zone Z2 may flow along the same direction. In addition, the coolants CL flowing through the first to fourth zones Z1, Z2, Z3 and Z4 may flow along the same direction from the first side frame 221 to the second side frame 222.

Specifically, among the cooling holes 220H formed in the side frame 220, the inflow cooling holes 220H1 may be communicated with the first zone Z1, the second zone Z2, the third zone Z3 and the fourth zone Z4, and the discharge cooling holes 220H2 may be communicated with the passage 700P inside the vertical beam 700. In addition, vertical beam holes 700H may be formed on the outer surface of the vertical beam 700, and the vertical beam holes 700H may be connected to the passage 700P inside the vertical beam 700.

The coolant CL may pass through the inlet port 910, the inflow cavity 220C1, and the inflow cooling hole 220H1 in sequence and be flowed into the first to fourth zones Z1, Z2, Z3 and Z4. The coolant CL flowing through each of the first to fourth zones Z1, Z2, Z3 and Z4 may move to the passage 700P inside the vertical beam 700 through the vertical beam holes 700H. Subsequently, the coolant CL may move again along the passage 700P toward the place where the first side frame 221 is located. The coolant CL flowing along the passage 700P may be discharged to the outside of the battery pack 100 through the discharge cooling hole 220H2, the discharge cavity 220C2, and the outlet port 920.

That is, the coolant CL may circulate along the inflow cavity 220C1 of the first side frame 221, the first zone Z1 and the second zone Z2, the passage 700P inside the vertical beam 700, and the discharge cavity 220C2 of the first side frame 221. More specifically, the coolant CL may circulate along the inflow cavity 220C1 of the first side frame 221, the first to fourth zones Z1, Z2, Z3 and Z4, the passage 700P inside the vertical beam 700, and the discharge cavity 220C2 of the first side frame 221. Through this circulation structure of the coolants CL, direct cooling of the battery cells 110 can be performed. In particular, the cavity 220C of the existing side frame 220 and the passage 700P of the vertical beam 700 are utilized as structures for circulating the coolant, and the vertical beams 700 are appropriately arranged, thereby enabling a uniform flow of the coolant CL for each zone. The uniform flow of the coolant CL for each zone can reduce the cooling deviation between the respective battery cells 110, which can lead an improvement in the performance of the battery pack 100.

Next, the directional venting structure of the battery pack 100 according to the present embodiments will be described.

Referring again to FIGS. 2, 3, 5, and 8 to 10, the vent part 110V of the battery cell 110 according to the present embodiments may face the spacer 300. More specifically, the vent part 110V of the battery cell 110 may face the seating part 310 of the spacer 300. The spacer 300 according to the present embodiments may include a spacer venting part 320a which is a part facing the vent part 110V; and an outer peripheral part 320b that wraps around the spacer venting part 320a. The spacer venting part 320a may have a thickness smaller than the outer peripheral part 320b or may have a notched groove. Due to a thermal event or thermal runaway of the battery cell 110, high-temperature venting gas and particles are discharged from the vent part 110V of the battery cell 110, and due to the pressure of the venting gas, the spacer venting part 320a may be separated from the outer peripheral part 320b and the spacer venting part 320a may be opened. That is, the high-temperature venting gas and particles may be discharged downward through the vent part 110V and the opened spacer venting part 320a. Subsequently, the high-temperature venting gas and particles may move along a preset path through the venting channel VC provided in the bottom frame 210. The specific structure of the bottom frame 210 and the venting channel VC will be described below.

The bottom frame 210 according to certain embodiments of the present disclosure may be formed with a venting channel VC that guides the high-temperature venting gas and particles discharged from the vent part 110V of the battery cell 110. Specifically, the bottom frame 210 may include a first frame 211 and a second frame 212 located below the first frame 211, and a venting channel VC may be formed between the first frame 211 and the second frame 212.

The first frame 211 may be formed with through holes 211H. When viewed along the height direction, the through holes 211H may be located so as to at least partially overlap the vent part 110V of the battery cell 110. The through holes 211H may be provided so as to correspond one-to-one with the vent part 110V. Similarly, the through holes 211H may be provided so as to correspond one-to-one with the spacer venting parts 320a.

High-temperature venting gas and particles passing through the venting part 110V and the opened spacer venting part 320a may flow into the venting channel VC inside the bottom frame 210 through the through holes 211H. The high-temperature venting gas and particles flowing into the venting channel VC are discharged to the outside of the battery pack 100. The battery pack 100 according to the present embodiments has a so-called "bottom vent" structure that discharges high-temperature venting gas and particles to the outside using the bottom frame 210. The above-described HV connection is a connection that serves as a power source to supply power that requires high voltage, and means a connection between battery cells, etc. If high-temperature venting gas or particles, etc. due to a thermal event of the battery cell 110 come into contact with a high-voltage path such as an HV connection, a short circuit or arc discharge may occur, which may lead to additional explosion and flame generation. On the other hand, the battery pack 100 according to the present embodiments has a "bottom vent" structure as described above, so that high-temperature venting gas or particles due to a thermal event are discharged downward, i.e., to the bottom frame 210. Therefore, there is no risk of high-temperature venting gas or particles coming into contact with a high-voltage path such as an HV connection, and ultimately, safety against thermal runaway phenomenon can be enhanced.

Furthermore, in the case of the present embodiments, since the holding frame 400 further covers the region where the electrode terminals 111 and 112 of the battery cells 110 and the busbar 130 are located, it is possible to completely block high-temperature venting gas or particles from reaching the region where the electrode terminals 111 and 112 of the battery cells 110 and the busbar 130 are located.

Further, since the battery pack 100 according to the present embodiments has a "bottom vent" structure, the influence affecting to high-temperature venting gas or particles on the coolant CL flowing in the space between the spacer 300 and the holding frame 400 can be minimized.

Further, the spacer 300 and the second waterproof adhesive 500b can prevent the coolant CL from leaking into the lower region of the spacer 300, as well as prevent the high-temperature venting gas or particles from leaking out in the upper direction rather than the lower direction where the bottom frame 210 is located.

Meanwhile, as described above, a vertical beam 700 that divides the accommodation space SS into a plurality of zones Z1, Z2, Z3 and Z4 can be located on the bottom frame 210. A venting channel VC corresponding to a certain zone may have an independent venting path that is not shared with a venting channel VC corresponding to the other zones. In one example, four second frames 212 corresponding to each of four zones Z1, Z2, Z3 and Z4 may be provided. A venting channel VC in one second frame 212 may have an independent venting flow path that is not communicated with a venting channel VC in the other second frame 212.

In addition, the second frame 212 may have at least one partition wall 212W, and may be divided into a plurality of venting channels VC within the second frame 212 due to the partition wall 212W.

In this way, some venting channels VC may not share a space with each other and may have independent venting paths. Thus, high-temperature venting gas and particles passing through one venting channel VC do not propagate to other venting channels VC. Thereby, the propagation of a thermal event occurring in a specific battery cell 110 to other battery cells 110 can be minimized. Therefore, high-temperature venting gas or particles do not flow back into other battery cells 110 communicating with other venting channels VC, and ultimately, thermal events are not propagated or triggered to other battery cells 110. In the present embodiments, by realizing unique venting paths between venting channels VC, thermal runaway transfer between battery cells 110 is minimized, and explosion and structural collapse of the battery pack can be prevented.

The high-temperature venting gas and particles flowing along the venting channel VC of the bottom frame 210 can move to the venting space VS between the separation frame 800 and the second side frame 222, and then finally be discharged to the outside through the venting device formed in the second side frame 222. The specific form of the venting device is not particularly limited, and the venting device can be a valve structure that opens or bursts when the internal pressure is above a certain level.

In the embodiments above, expressions indicating directions such as "front," "rear," "left," "right," "up," and "down" have been used. These expressions are used only to facilitate the description, and may vary, for example, depending on the location of a target object or an observer.

The battery pack according to certain embodiments of the present disclosure described above can be applied to various devices, which include, for example, transportation vehicles such as electric bicycles, electric vehicles, and hybrids, and energy storage systems (ESS). However, without being limited thereto, the battery pack may be applied to various devices using secondary batteries.

Although the present disclosure has been illustrated and described above with reference to preferred embodiments thereof, the technical scope of the present disclosure is not limited to the embodiments, and also includes various modifications and variations made by one of ordinary skill in the art using the concepts defined in the claims attached therewith.

### [Description of Reference Numerals]

100: battery pack
110: battery cell
110V: vent part
200: pack frame
210: bottom frame
220: side frame
220C: cavity
300: spacer
400: holding frame
610: pack upper cover
620: pack lower cover
910: inlet port
920: outlet port

## Claims

1. A battery pack comprising:
a plurality of battery cells;
a pack frame including a bottom frame and a side frame that form an accommodation space in which the battery cells are stored; and
a coolant that flows while directly cooling the battery cells in the accommodation space,
wherein the side frame is provided with an inlet port for allowing the coolant to flow in and an outlet port for discharging the coolant, and
wherein cavities are formed inside the side frame, and each of the cavities is communicated with the inlet port and the outlet port.

2. The battery pack of claim 1,
wherein the side frame has a square pipe structure in which the cavities are formed inside.

3. The battery pack of claim 1,
wherein the inlet port and the outlet port are located at a surface opposite to the surface where the side frame faces the battery cells.

4. The battery pack of claim 3,
wherein a cooling hole communicating with the cavity is formed on the surface where the side frame faces the battery cells.

5. The battery pack of claim 1,
wherein the coolant flows into the accommodation space or is discharged from the accommodation space, while flowing through the cavity.

6. The battery pack of claim 1,
wherein the cavity comprises an inflow cavity connected to the inlet port and a discharge cavity connected to the outlet port, and
the inflow cavity and the discharge cavity are separated from each other.

7. The battery pack of claim 6,
wherein the coolant flows into the accommodation space through the inlet port and the inflow cavity, and
the coolant that directly cools the battery cells is discharged to the outside through the discharge cavity and the outlet port.

8. The battery pack of claim 1,
wherein the side frame comprises a first side frame and a second side frame that are located opposite to each other with the battery cells between them, and
the first side frame has both the inlet port and the outlet port formed therein.

9. The battery pack of claim 8,
wherein the cavity comprises an inflow cavity connected to the inlet port and a discharge cavity connected to the outlet port,
a vertical beam dividing the accommodation space into a first zone and a second zone is located on the bottom frame, and
the coolant flows through the first zone and the second zone in sequence.

10. The battery pack of claim 9,
wherein a separation frame is located between the battery cells and the second side frame, and
the coolant circulates along the inflow cavity of the first side frame, the first zone, the cavity inside the separation frame, the second zone, and the discharge cavity of the first side frame.

11. The battery pack of claim 8,
wherein the cavity comprises an inflow cavity connected to the inlet port and a discharge cavity connected to the outlet port,
a vertical beam dividing the accommodation space into a first zone and a second zone and having a passage formed therein is located on the bottom frame, and
the coolant flowing through the first zone and the coolant flowing through the second zone flow along the same direction.

12. The battery pack of claim 11,
wherein the coolant circulates along the inflow cavity of the first side frame, the first zone and the second zone, the passage inside the vertical beam, and the discharge cavity of the first side frame.

13. The battery pack of claim 1,
wherein the battery cells comprise a vent part, and
the bottom frame is formed with a venting channel that guides venting gas or particles discharged from the vent part of the battery cell.

14. The battery pack of claim 13,
wherein a vertical beam dividing the accommodation space into a plurality of zones is located on the bottom frame, and
the venting channel corresponding to any one of the zones has an independent venting flow path that is not shared with the venting channel corresponding to the other zones.

15. A device comprising the battery pack of claim 1.
